# FASCICULE DE BREVET EUROPEEN

(11) **EP 3 874 164 B1**
(45) Date de publication et mention de la délivrance du brevet: **30.11.2022**
(21) Numéro de dépôt: 18807416.5
(22) Date de dépôt: 30.10.2018
(51) Int. Cl.: F03D 13/20, F03D 13/10

(54) **TRONÇON DE MÂT D'ÉOLIENNE, MÂT D'ÉOLIENNE ET PROCÉDÉ D'ASSEMBLAGE**
WINDTURBINENTURMABSCHNITT, WINDTURBINENTURM UND MONTAGEVERFAHREN
WIND TURBINE MAST SECTION, WIND TURBINE MAST AND ASSEMBLY METHOD

(43) Date de publication de la demande: 08.09.2021
(73) Titulaire: ArcelorMittal, 1160 Luxembourg (LU)
(72) Inventeur: VENTURA GARCIA, Beatriz, 4000 Liège (BE); GREMLING, Michaël, 4100 Seraing (BE); DUPONT, Emilie, 4900 Spa (BE)
(74) Mandataire: Lavoix
(86) Numéro de dépôt international: PCT/IB2018/058467
(87) Numéro de publication internationale: WO 2020/089673

(56) Documents cités:
- EP-A1- 2 006 471
- CN-U- 205 669 338
- US-A1- 2009 090 069
- US-A1- 2011 283 652

## Description

La présente invention concerne un tronçon de mât pour éolienne, un mât d'éolienne comprenant un tel tronçon, ainsi qu'un procédé d'assemblage d'un tronçon de mât pour éolienne.

Les efforts d'amélioration du rendement énergétique des éoliennes ont conduit au cours du temps à une augmentation de la taille des turbines, nécessitant, pour leur support, des mâts de hauteur et de diamètre accrus. Du fait de leurs dimensions importantes, de tels mâts ne peuvent pas être transportés assemblés. Par conséquent, les mâts sont généralement transportés par portions jusqu'à leur site d'implantation, avant de procéder à leur assemblage in situ.

Plus particulièrement, il existe des procédés d'assemblage de mâts d'éolienne, selon lesquels on transporte des segments de paroi de l'éolienne jusqu'au site d'implantation de l'éolienne, puis on assemble ces segments de paroi au moyen de connecteurs de segment pour former des éléments de mât sensiblement tubulaires, généralement cylindriques ou tronconiques, lesquels sont ensuite successivement assemblés entre eux au moyen de connecteurs d'élément pour former le mât d'éolienne.

Compte tenu des dimensions de plus en plus importantes des mâts d'éoliennes, il est nécessaire d'améliorer la résistance mécanique de ces mâts de sorte à minimiser le risque de défaillance en cours d'utilisation, notamment par flambage, tout en limitant autant que possible les coûts de fabrication et le temps d'assemblage.

EP2006471A1 est un document d'antériorité ayant trait à un mât d'éolienne fait d'un assemblage de plaques boulonnées à des éléments de connexion.

Un but de l'invention est de fournir un mât d'éolienne, éventuellement de grande hauteur, présentant une durée de vie accrue et pouvant être transporté facilement et rapidement et assemblé à moindre coût.

A cet effet, l'invention concerne un tronçon de mât pour éolienne, selon la revendication 1, présentant un axe central longitudinal s'étendant suivant une direction longitudinale et comprenant une paroi comprenant une surface intérieure et une surface extérieure, le tronçon de mât comprenant au moins deux éléments de mât tubulaires empilés selon la direction longitudinale, agencés bord à bord au niveau d'un plan de jonction et connectés entre eux par des connecteurs d'élément s'étendant chacun à cheval sur lesdits deux éléments de mât, chaque élément de mât comprenant au moins deux segments de paroi, connectés entre eux par des connecteurs de segment s'étendant le long des bords longitudinaux des segments de paroi, les connecteurs d'élément étant disposés uniquement sur l'une parmi la surface intérieure et la surface extérieure de la paroi du tronçon de mât et les connecteurs de segment étant disposés uniquement sur l'autre parmi la surface intérieure et la surface extérieure de la paroi du tronçon de mât et aucun connecteur d'élément ne s'étendant au moins en partie en regard d'un connecteur de segment selon une direction radiale du tronçon de mât de sorte que la paroi n'est en aucun point interposée entre ce connecteur d'élément un connecteur de segment.

Selon des modes de réalisation particuliers, le tronçon de mât présente l'une ou plusieurs des caractéristiques suivantes, prises isolément ou selon toute combinaison techniquement possible :
- les connecteurs d'élément sont disposés sur la surface extérieure du tronçon de mât et les connecteurs de segment sont disposés sur la surface intérieure du tronçon de mât,
- chaque connecteur d'élément s'étend entre au moins deux connecteurs de segment alignés selon la direction longitudinale, l'un de ces deux connecteurs de segment, dit connecteur de segment supérieur, étant disposé au-dessus du plan de jonction entre les deux éléments de mât et l'autre de ces deux connecteurs de segment, dit connecteur de segment inférieur, étant disposé en-dessous de ce plan de jonction,
- l'écart entre le bord transversal supérieur du connecteur d'élément et le bord transversal inférieur du connecteur de segment supérieur est supérieur ou égal à zéro et l'écart entre le bord transversal inférieur du connecteur d'élément et le bord transversal supérieur du connecteur de segment inférieur est supérieur ou égal à zéro,
- le bord transversal supérieur du connecteur d'élément et le bord transversal inférieur du connecteur de segment supérieur sont situés dans un même plan perpendiculaire à la direction longitudinale et dans lequel le bord transversal inférieur du connecteur d'élément et le bord transversal supérieur du connecteur de segment inférieur sont situés dans un même plan perpendiculaire à la direction longitudinale,
- chaque connecteur de segment et/ou chaque connecteur d'élément est sous la forme d'une plaque plane,
- chaque segment de paroi comprend au moins un pan central et deux pans latéraux formant un angle avec le ou chaque pan central, les pans latéraux comprenant les bords longitudinaux du segment de paroi,
- le tronçon de mât comprend en outre des connecteurs intermédiaires, disposés à cheval sur deux éléments de mât adjacents, entre deux connecteurs d'élément adjacents circonférentiellement, lesdits connecteurs intermédiaires étant disposés sur la même surface parmi la surface intérieure et la surface extérieure du tronçon de mât que les connecteurs d'élément,
- chaque connecteur intermédiaire s'étend à cheval sur deux pans centraux adjacents longitudinalement des deux éléments de mât et chaque connecteur de segment s'étend à cheval sur deux pans latéraux adjacents circonférentiellement de l'un au moins des deux éléments de mât adjacents,
- les bords longitudinaux d'un segment de paroi de l'élément de mât supérieur se situent dans le prolongement des bords longitudinaux du segment de paroi adjacent selon la direction longitudinale de l'élément de mât inférieur,
- les éléments de mât adjacents sont décalés angulairement les uns par rapport aux autres,
- le tronçon de mât présente une forme tubulaire de section transversale polygonale, chaque côté de ce polygone définissant une facette du tronçon de mât.

L'invention concerne également un mât d'éolienne, selon la revendication 13, comprenant un tronçon de mât tel que décrit précédemment.

L'invention concerne également un procédé d'assemblage, selon la revendication 14, d'un tronçon de mât tel que décrit précédemment, comprenant :
- la fourniture de segments de paroi et l'assemblage de ces segments de paroi entre eux par l'intermédiaire de connecteurs de segment de sorte à former des éléments de mât ;
- l'empilement, selon la direction longitudinale, de deux éléments de mât et la connexion entre eux de ces deux éléments de mât au moyen de connecteurs d'élément.

L'invention sera mieux comprise à la lecture de la description qui va suivre, donnée uniquement à titre d'exemple, et faite en référence aux dessins annexés, sur lesquels :
- la figure 1 est une vue schématique en perspective d'une éolienne ;
- la figure 2 est une vue schématique en perspective d'une partie d'un tronçon de mât d'éolienne ;
- la figure 3 est une vue schématique en perspective éclatée d'une partie du tronçon de mât de la figure 2 ;
- la figure 4 est une vue schématique agrandie d'une zone de jonction entre deux éléments de mât du tronçon de mât de la figure 2, vue depuis l'extérieur du mât,
- la figure 5 est une vue schématique agrandie d'une zone de jonction entre deux éléments de mât d'un tronçon de mât de la figure 2, vue depuis l'extérieur du mât, montrant un connecteur d'élément et, en pointillés, des connecteurs de segment disposés à l'intérieur du tronçon de mât ;
- la figure 6 est une vue analogue à la figure 5, vue depuis l'intérieur du mât, montrant des connecteurs de segment disposés à l'intérieur du mât et, en pointillés, un connecteur d'élément disposé à l'extérieur du tronçon de mât.

Dans toute la description, on entend par « connexion » la fixation mécanique par un organe de connexion, et en particulier la fixation par boulonnage ou par vissage. Ce terme ne recouvre donc notamment pas la fixation par soudage ou par brasage.

L'emploi de boulons ou de vis pour réaliser les connexions permet de gérer au mieux le comportement en fatigue du tronçon de mât en choisissant les emplacements et la densité des boulons ou des vis en fonction des impératifs de résistance et d'endurance à la fatigue. Par ailleurs, l'absence de soudures au sein du tronçon de mât et du mât d'éolienne permet d'éviter la présence de zones affectées thermiquement, ce qui garantit une homogénéité des performances des aciers et supprime les points faibles engendrés par ces zones affectées thermiquement.

On entend par « hauteur », la dimension d'un élément suivant la direction longitudinale et par « largeur », la dimension de cet élément perpendiculairement à la direction longitudinale.

Dans toute la description, on entend par « bords longitudinaux » d'un élément, les bords de cet élément s'étendant selon la direction longitudinale. On entend par « bords transversaux », les bords de cet élément s'étendant perpendiculairement à la direction longitudinale.

Les termes « haut » et « bas », « en-dessous » et « au-dessus » et « inférieur » et « supérieur » sont utilisés par rapport à l'orientation normale du mât d'éolienne 2 sur son site d'implantation.

Dans toute la description, on entend par « décalage angulaire » la rotation d'un élément constitutif du mât selon l'axe longitudinal central L comparativement à un élément adjacent.

Dans toute la description, les éléments constitutifs du mât, du tronçon de mât et des éléments de mât sont de préférence réalisés en métal, en particulier en acier, et tout particulièrement à partir de bobines ou de plaques d'acier.

Le tronçon de mât 1 pour éolienne suivant l'invention est destiné à former une partie d'un mât 2 d'une éolienne 3.

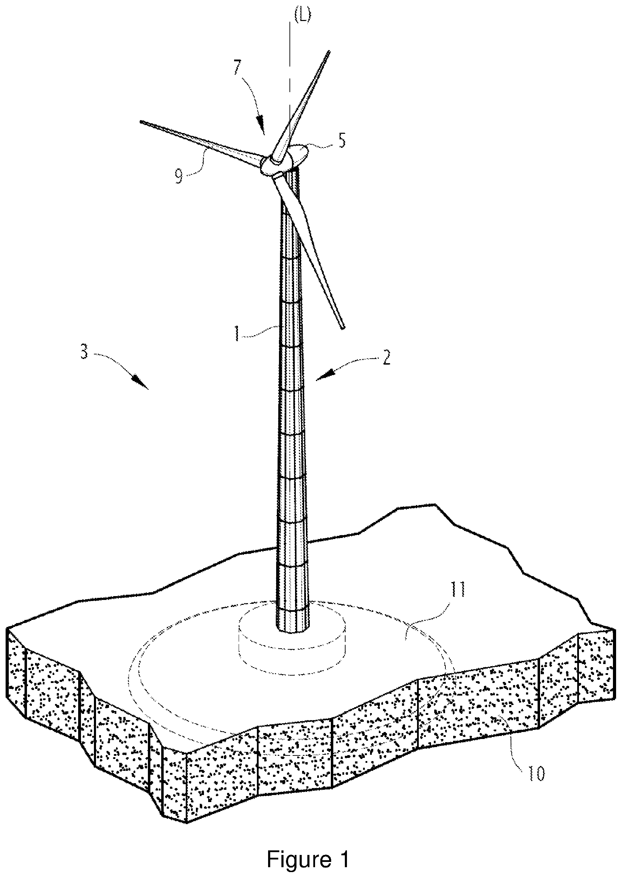

De manière classique, et comme illustré sur la figure 1, l'éolienne 3 comprend, à son extrémité supérieure, une nacelle 5 et un rotor 7 monté sur la nacelle 5. La nacelle 5, montée à l'extrémité supérieure du mât 2, abrite des composants mécaniques, électriques et électroniques pour le fonctionnement de l'éolienne 3. Le rotor 7 comprend une pluralité de pales 9 destinées à être entraînées en rotation autour d'un axe du rotor 7 par l'énergie du vent. A son extrémité inférieure, le mât d'éolienne 2 est destiné à être ancré dans le sol 10 du site d'implantation, par tout moyen connu de l'homme du métier, notamment par des fondations 11 adaptées.

Le tronçon de mât 1 selon l'invention présente une forme tubulaire d'axe longitudinal central L s'étendant suivant une direction longitudinale. Lorsque le tronçon de mât 1 est installé sur son site d'implantation, la direction longitudinale s'étend suivant la verticale du site d'implantation.

Dans les exemples illustrés sur les figures, le tronçon de mât 1 présente une forme tronconique, se rétrécissant vers le haut du mât 2.

On entend par « cône » toute surface réglée définie par une génératrice passant par un sommet et un point variable décrivant une courbe directrice.

A titre d'exemple, le tronçon de mât 1 présente un diamètre extérieur de l'ordre de 7 à 11 mètres, et par exemple égal à 9 mètres, à son extrémité inférieure, et de l'ordre de 2 à 4 mètres, et par exemple égal à 4 mètres, à son extrémité supérieure. Ces diamètres peuvent cependant être adaptés en fonction d'impératifs de résistance, de connexion à la nacelle ou liés au site d'installation.

Le tronçon de mât 1 comprend une paroi comprenant une surface intérieure 12 et une surface extérieure 13. La surface intérieure 12 du tronçon de mât 1 est orientée vers l'intérieur du tronçon de mât 1. La surface extérieure 13 du tronçon de mât 1 est orientée vers l'extérieur du tronçon de mât 1.

Le tronçon de mât 1 présente de préférence une section transversale polygonale. Chaque côté de ce polygone définit une facette de la paroi du tronçon de mât 1.

Une forme tronconique polygonale présente l'avantage de se rapprocher au mieux de la forme tronconique à base circulaire, qui est la forme présentant la meilleure résistance au vent quelle que soit l'orientation de celui-ci et la meilleure inertie, tout en étant très simple à fabriquer, puisqu'elle peut notamment être réalisée à partir de segments de paroi obtenus par simple pliage ou profilage de tôles métalliques.

Selon une variante, le tronçon de mât 1 présente une forme cylindrique à base polygonale de section transversale constante.

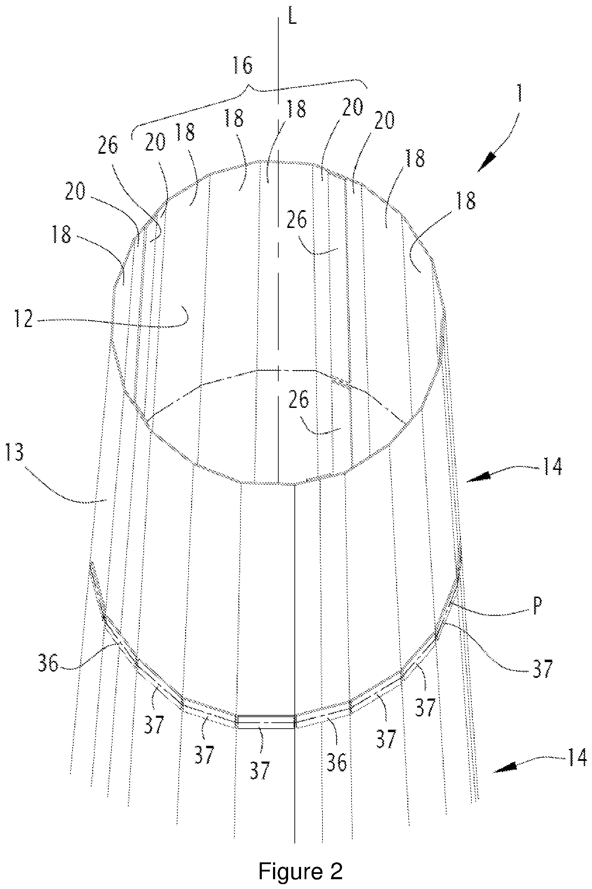

Comme cela est illustré sur la figure 2, le tronçon de mât 1 comprend au moins deux éléments de mât 14, empilés selon la direction longitudinale. Les éléments de mât 14 adjacents du tronçon de mât 1 sont agencés bord à bord, le long d'un plan de jonction P, moyennant les jeux nécessaires à l'assemblage.

Chaque élément de mât 14 présente une forme tubulaire, d'axe longitudinal central confondu avec l'axe longitudinal central L du tronçon de mât 1. Il présente une forme générale analogue à celle du tronçon de mât 1.

Dans les exemples représentés, l'élément de mât 14 présente une forme tronconique, de préférence à base polygonale, se rétrécissant vers le haut de l'élément de mât 14.

Lorsque le tronçon de mât 1 présente une forme cylindrique à base polygonale, l'élément de mât 14 présente également une forme cylindrique à base polygonale.

Chaque élément de mât 14 comprend une pluralité de segments de paroi 16 connectés entre eux par leurs bords longitudinaux. Les segments de paroi 16 adjacents d'un élément de mât 14 sont agencés bord à bord, le long d'une ligne de jonction, moyennant les jeux nécessaires à l'assemblage.

Le fait que les éléments de mât 14 soient formés d'une pluralité de segments de paroi 16 connectés entre eux évite d'être limité par le transport en ce qui concerne le diamètre final de l'élément de mât 14. En effet, les segments de paroi 16 sont relativement peu encombrants et peuvent donc être transportés par des camions standards. Ils peuvent ensuite être assemblés directement sur le site d'implantation pour obtenir des éléments de mât 14 présentant le diamètre souhaité.

Par ailleurs, la conception basée sur l'assemblage de petits éléments permet d'effectuer le transport par des véhicules compacts et légers, ce qui permet de considérer de nouveaux sites d'implantation jusqu'alors inenvisageables car difficilement carrossables pour des transports lourds tels que les transports dits exceptionnels.

A titre d'exemple, l'épaisseur des segments de paroi 16 varie en fonction de leur position le long du mât 2, en diminuant de la base vers le sommet du mât 2. Les segments de paroi 16 présentent par exemple une épaisseur égale à 30 mm à la base du mât 2 et à 16 mm au sommet du mât 2.

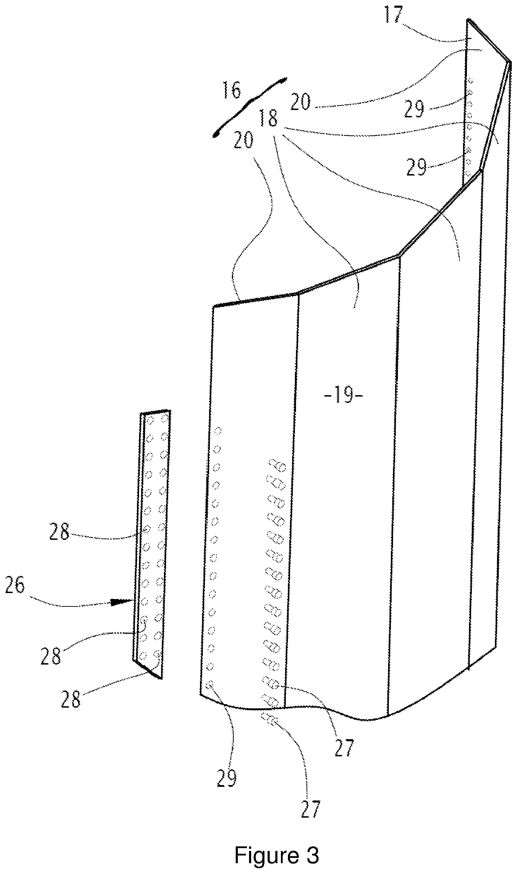

Comme cela est représenté sur la figure 3, chaque segment de paroi 16 comprend une face intérieure 17, orientée vers l'intérieur du tronçon de mât 1 et une face extérieure 19, orientée vers l'extérieur du tronçon de mât 1. La surface intérieure 12 du tronçon de mât 1 est formée par la réunion des faces intérieures 17 de chacun des segments de paroi 16 du tronçon de mât 1. La surface extérieure 13 du tronçon de mât 1 est formée par la réunion des faces extérieures 18 de chacun des segments de paroi 16 du tronçon de mât 1.

Dans l'exemple représenté sur les figures 2 et 3, chaque segment de paroi 16 comprend au moins un pan central 18 et deux pans latéraux 20. Les pans latéraux 20 s'étendent de part et d'autre du pan central 18 selon la circonférence de l'élément de mât 14. Ils encadrent latéralement le pan central 18. Les pans latéraux 20 comprennent les bords longitudinaux du segment de paroi 16. Ils forment chacun un angle avec le ou chaque pan central 18.

Ce type de segment de paroi 16 présente l'avantage d'être facilement obtenu par simple pliage d'une feuille métallique. Les pans latéraux 20 rigidifient les segments de paroi 16 et augmentent la résistance desdits segments 16 à la flexion suivant la direction longitudinale.

Dans l'exemple représenté, pour l'élément de mât 14 représenté, chaque segment de paroi 16 comprend plusieurs pans centraux 18, adjacents selon la circonférence de l'élément de mât 14. Cet ensemble de pans centraux 18 adjacents est encadré par les deux pans latéraux 20. Plus particulièrement, dans cet exemple, pour l'élément de mât 14 représenté, chaque segment de paroi 16 comprend trois pans centraux 18 et deux pans latéraux 20.

Selon un mode de réalisation, les segments de paroi 16 d'un élément de mât 14 donné présentent un nombre de pans centraux 18 dépendant de la position de l'élément de mât selon la direction longitudinale. A titre d'exemple, le nombre de pans centraux 18 par segment de paroi 16 augmente de bas en haut le long du tronçon de mât 1.

La réunion des pans latéraux 20 adjacents de deux segments de paroi 16 adjacents d'un élément de mât 14 forme une facette de l'élément de mât 14. Chaque pan central 18 d'un segment de paroi 16 forme également une facette de l'élément de mât 14.

Chaque facette du tronçon de mât 1 associé correspond alors à la réunion des facettes adjacentes longitudinalement des éléments de mât 14 empilés.

Les segments de paroi 16 sont assemblés entre eux par des connecteurs de segment 26 s'étendant le long des bords longitudinaux des segments de paroi 16.

Les connecteurs de segment 26 sont rapportés sur les segments de paroi 16.

Chaque connecteur de segment 26 s'étend à cheval sur deux segments de paroi 16 adjacents circonférentiellement d'un élément de mât 14. Il est fixé sur les pans latéraux 20 adjacents des deux segments de paroi 16 adjacents de l'élément de mât 14.

Les connecteurs de segment 26 sont illustrés plus particulièrement sur les figures 2, 3, 5 et 6.

Dans l'exemple représenté sur les figures 1 à 6, les connecteurs de segment 26 sont disposés sur la surface intérieure 12 du tronçon de mât 1. Dans cet exemple, chaque connecteur de segment 26 prend appui surfacique sur la surface intérieure 12 du tronçon de mât 1, et plus particulièrement sur les faces intérieures 17 des deux segments de parois 16 connectés entre eux par le connecteur de segment 26.

Comme cela est illustré schématiquement sur la figure 3, chaque connecteur de segment 26 est fixé sur les segments de paroi 16 correspondants par l'intermédiaire de premiers organes de connexion 27, notamment des vis ou des boulons. A cet effet, les connecteurs de segment 26 comprennent des orifices de connexion 28 destinés à recevoir les premiers organes de connexion 27. Ces orifices de connexion 28 sont organisés sous la forme d'un réseau comprenant des lignes, s'étendant perpendiculairement à la direction longitudinale et des rangées, s'étendant parallèlement à la direction longitudinale.

Les segments de paroi 16 comprennent également des orifices de connexion 29 organisés selon un réseau coïncidant avec celui des orifices de connexion 28 des connecteurs de segment 26.

Pour des raisons de simplification des dessins, les premiers organes de connexion 27 et les orifices de connexion 28, 29 ne sont représentés que sur certaines des figures.

De préférence, les connecteurs de segment 26 sont plans. Ils sont avantageusement réalisés par simple découpage à partir d'une tôle d'acier.

Dans le mode de réalisation représenté sur les figures 1 à 6, la largeur des connecteurs de segment 26 est constante sur toute leur hauteur. Chaque connecteur de segment 26 présente, dans cet exemple, une forme rectangulaire allongée suivant la direction longitudinale.

Dans ce mode de réalisation, la largeur des connecteurs de segment 26 est inférieure ou égale à 40% de la largeur de la facette de l'élément de mât 14 formée par la connexion des pans latéraux 20 des deux segments de paroi 16 de l'élément de mât 14 au moyen dudit connecteur de segment 26. Plus particulièrement, elle est inférieure ou égale à 30% de cette largeur. Cette largeur peut être adaptée pour chaque connecteur de segment 26 du tronçon de mât 1 en fonction des efforts que le connecteur de segment 26 devra supporter.

De préférence, pour des raisons économiques et de logistique sur chantier, tous les connecteurs de segment 26 du tronçon de mât 1 présentent les mêmes dimensions.

Selon un mode de réalisation, chaque élément de mât 14 comprend un seul connecteur de segment 26 au niveau de chaque jonction entre deux segments de paroi 16 adjacents circonférentiellement.

Selon une variante, l'élément de mât 14 comprend, à chaque jonction entre deux segments de paroi 16 adjacents, au moins deux connecteurs de segment 26 adjacents selon la direction longitudinale.

Le choix du nombre de connecteurs de segment 26 par élément de mât 14 dépend de la hauteur desdits éléments de mâts 14, le nombre de connecteurs de segment 26 par élément de mât 14 augmentant notamment avec la hauteur de l'élément de mât 14.

Le tronçon de mât 1 comprend en outre des moyens de connexion entre eux de deux éléments de mât 14 adjacents selon la direction longitudinale.

Ces moyens de connexion comprennent des connecteurs d'élément 36, s'étendant chacun à cheval sur deux éléments de mât 14 adjacents selon la direction longitudinale.

Chaque connecteur d'élément 36 s'étend dans le prolongement, selon la direction longitudinale, d'au moins un connecteur de segment 26.

Selon l'invention, et comme cela est représenté en particulier sur les figures 2, 5 et 6, les connecteurs d'élément 36 sont disposés sur une surface opposée du tronçon de mât 1 par rapport aux connecteurs de segment 26. Dans l'exemple représenté sur les figures, les connecteurs de segment 26 sont disposés sur la surface intérieure 12 du tronçon de mât 1, tandis que les connecteurs d'élément 36 sont disposés sur la surface extérieure 13 du tronçon de mât 1. Chaque connecteur d'élément 36 prend appui surfacique sur la surface extérieure 13 du tronçon de mât 1. Autrement dit, le tronçon de mât ne comprend aucun connecteur s'étendant à cheval sur les deux éléments de mât 14 et disposé sur la surface intérieure 12 du tronçon de mât 1.

De préférence, les connecteurs d'élément 36 sont plans. Ils sont avantageusement réalisés par simple découpage à partir d'une tôle d'acier.

Dans le mode de réalisation représenté, la largeur des connecteurs d'élément 36, prise perpendiculairement à la direction longitudinale, est constante sur toute la hauteur des connecteurs d'élément 36, prise selon la direction longitudinale.

Chaque connecteur d'élément 36 présente, dans les exemples illustrés, une forme rectangulaire allongée suivant une direction perpendiculaire à la direction longitudinale.

Dans le cas d'un tronçon de mât 1 présentant des facettes, chaque connecteur d'élément 36 s'étend sur une facette du tronçon de mât 1, à cheval sur les facettes adjacentes longitudinalement des éléments de mât 14 connectés entre eux par ce connecteur d'élément 36.

Les connecteurs d'élément 36 présentent une largeur inférieure ou égale à la largeur de la facette du tronçon de mât 1 sur laquelle ils sont fixés, prise au niveau du plan de jonction P entre ces deux éléments de mât 14. Avantageusement, les connecteurs d'élément 36 présentent une largeur supérieure ou égale à 70% de la largeur de cette facette, et plus particulièrement supérieure ou égale à 85% de cette largeur. Dans le mode de réalisation représenté sur les figures, les connecteurs d'élément 36 présentent une largeur sensiblement égale à la largeur de la facette du tronçon de mât 1 sur laquelle ils sont fixés.

Dans l'exemple représenté sur les figures, le connecteur d'élément 36 s'étend selon la direction transversale au-delà du connecteur de segment 26 adjacent.

Dans l'exemple représenté sur les figures, les connecteurs d'élément 36 sont symétriques par rapport au plan de jonction P entre les éléments de mât 14 qu'ils chevauchent.

Les connecteurs d'élément 36 sont fixés sur les éléments de mât 14 au moyen de deuxièmes organes de connexion (non représentés), formés par exemple par des vis ou des boulons.

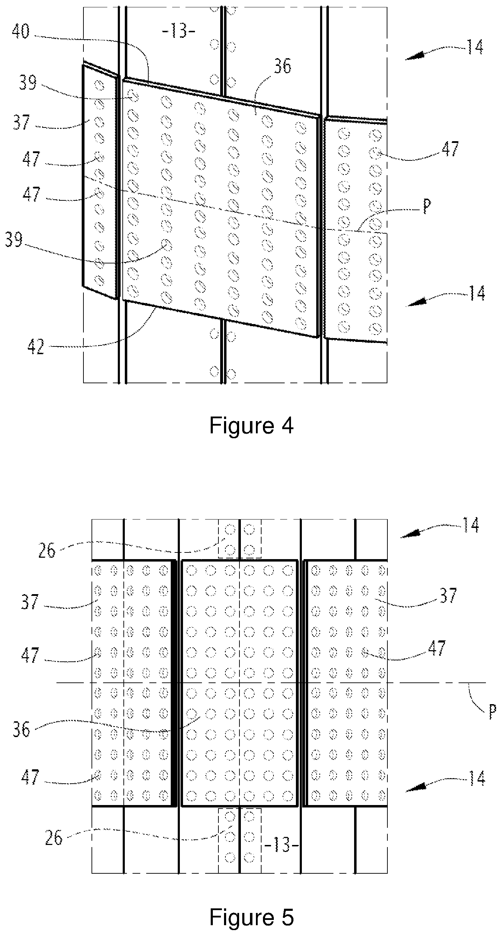

A titre d'exemple, et comme représenté sur la figure 4, chaque connecteur d'élément 36 comprend un réseau régulier d'orifices de connexion 39 destinés à recevoir les deuxièmes organes de connexion, ce réseau comprenant des lignes, s'étendant perpendiculairement à la direction longitudinale et des rangées, s'étendant parallèlement à la direction longitudinale. Ce réseau est par exemple un réseau à maille rectangulaire, et par exemple à maille carrée. Les orifices de connexion 39 sont répartis régulièrement sur toute la surface des connecteurs d'élément 36.

La distance entre orifices de connexion 39 adjacents est choisie de sorte à optimiser la résistance mécanique et l'endurance à la fatigue en fonction des besoins et des critères géométriques établis par les normes en vigueur.

Les segments de mât 16 comprennent un réseau d'orifices de connexion (non représenté) coïncidant avec le réseau d'orifices de connexion 39 des connecteurs d'élément 36.

Au sein des connecteurs de segment 26 et/ou des connecteurs d'élément 36, les distances entre les lignes d'orifices de connexion 28, 39, formées perpendiculairement à la direction longitudinale et/ou entre les rangées d'orifices de connexion 28, 39, formées parallèlement à la direction longitudinale, sont choisies de manière à optimiser le nombre de boulons nécessaires en fonction des contraintes mécaniques.

A titre d'exemple, la distance entre les lignes d'orifices de connexion 28 des connecteurs de segment 26 est différente de la distance entre les lignes d'orifices de connexion 39 des connecteurs d'élément 36.

Dans le mode de réalisation représenté sur les figures 1 à 6, les distances entre les rangées d'orifices de connexion 28, formées parallèlement à la direction longitudinale, des connecteurs de segment 26 et entre les rangées d'orifices de connexion 39, formées parallèlement à la direction longitudinale, des connecteurs d'élément 36 sont identiques de telle sorte qu'au sein du tronçon de mât 1, les rangées d'orifices de connexion 28 s'étendent dans le prolongement, selon la direction longitudinale, de rangées d'orifices de connexion 39.

Pour des raisons de simplification des dessins, les deuxièmes organes de connexion et les orifices de connexion ne sont représentés que sur certaines des figures.

Dans le mode de réalisation représenté sur les figures 1 à 6, les bords longitudinaux d'un segment de paroi 16 de l'élément de mât 14 supérieur se situent dans le prolongement des bords longitudinaux du segment de paroi 16 adjacent selon la direction longitudinale de l'élément de mât 14 inférieur. Ainsi, les pans latéraux 20 de l'élément de mât 14 supérieur se trouvent dans le prolongement, selon la direction longitudinale, des pans latéraux 20 de l'élément de mât 14 inférieur et les pans centraux 18 de l'élément de mât 14 supérieur se trouvent dans le prolongement, selon la direction longitudinale, des pans centraux 18 de l'élément de mât 14 inférieur. Dans cet exemple, chaque connecteur d'élément 36 s'étend à cheval sur les pans latéraux 20 de quatre segments de paroi 16 adjacents.

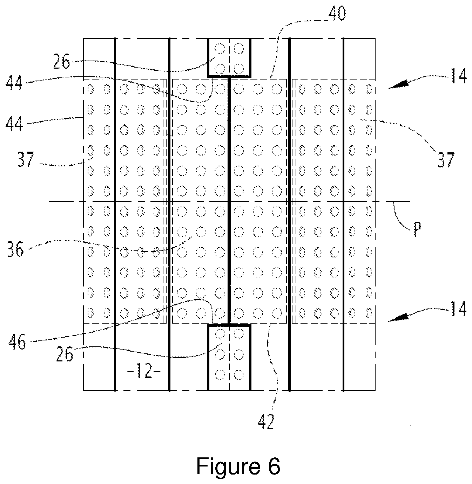

Selon l'invention, et comme cela est illustré plus particulièrement sur les figures 5 et 6, aucun connecteur d'élément 36 ne s'étend en regard d'un connecteur de segment 26 selon une direction radiale du tronçon de mât 1 de sorte que la paroi n'est en aucun point interposée entre ce connecteur d'élément 36 et un connecteur de segment 26.

Par « direction radiale », on entend une direction passant par l'axe central longitudinal L du tronçon de mât 1 et s'étendant dans un plan normal à cet axe central longitudinal L.

Il n'existe ainsi pas de zone de recouvrement entre le connecteur d'élément 36 et le connecteur de segment 26.

Ainsi, au niveau de chaque jonction entre deux éléments de mât 14, il ne se produit aucune superposition, selon la direction radiale, du connecteur d'élément 36, de la paroi de l'élément de mât 14 et du connecteur de segment 26 résultant en une triple épaisseur de parois.

En particulier, l'écart entre le bord transversal supérieur du connecteur d'élément 36 et le bord transversal inférieur du connecteur de segment 26 disposé au-dessus du plan de jonction P est supérieur ou égal à zéro. Dans l'exemple représenté sur les figures 1 à 6, cet écart est nul ; autrement dit, le bord transversal supérieur du connecteur d'élément 36 et le bord transversal inférieur du connecteur de segment 26 disposé au-dessus du plan de jonction P sont dans le même plan horizontal.

De même, l'écart entre le bord transversal inférieur du connecteur d'élément 36 et le bord transversal supérieur du connecteur de segment 26 disposé en-dessous du plan de jonction P est supérieur ou égal à zéro. Dans l'exemple représenté sur les figures 1 à 6, cet écart est nul ; autrement dit, le bord transversal inférieur du connecteur d'élément 36 et le bord transversal supérieur du connecteur de segment 26 disposé en-dessous du plan de jonction P sont dans le même plan horizontal.

Dans l'exemple représenté sur les figures 1 à 6, chaque connecteur d'élément 36 s'étend entre deux connecteurs de segment 26 alignés selon la direction longitudinale.

L'un de ces deux connecteurs de segment 26, appelé dans la suite connecteur de segment 26 supérieur, connecte entre eux des segments de paroi 16 de l'élément de mât 14 supérieur parmi les deux éléments de mât 14 connectés entre eux par le connecteur d'élément 36, tandis que l'autre connecteur de segment 26, appelé dans la suite connecteur de segment 26 inférieur, connecte entre eux des segments de paroi 16 de l'élément de mât 14 inférieur parmi les deux éléments de mât 14 connectés entre eux par le connecteur d'élément 36.

Le connecteur de segment 26 supérieur est disposé au-dessus du plan de jonction P entre les éléments de mât 14 connectés entre eux par le connecteur d'élément 36, tandis que le connecteur de segment 26 inférieur est disposé en-dessous du plan de jonction P.

Avantageusement, le connecteur de segment 26 supérieur et le connecteur de segment 26 inférieur sont symétriques par rapport au plan de jonction P entre les deux éléments de mât 14 connectés par le connecteur d'élément 36.

Par conséquent, l'écart entre le bord inférieur 42 du connecteur d'élément 36 et le bord supérieur 46 du connecteur de segment 26 inférieur est identique à l'écart entre le bord supérieur 40 du connecteur d'élément 36 et bord inférieur 44 du connecteur de segment 26 supérieur.

En option, les moyens de connexion entre eux des éléments de mât 14 comprennent en outre des connecteurs intermédiaires 37, représentés en particulier sur les figures 2 et 4.

Les connecteurs intermédiaires 37 connectent les éléments de mât 14 entre eux au niveau des pans centraux 18 de leurs segments de paroi 16. Ils s'étendent à cheval sur les deux éléments de mât 14 adjacents en étant fixés sur les pans centraux 18 des segments de paroi 16 de ces éléments de mât 14. Ils sont disposés entre deux connecteurs d'élément 36 adjacents circonférentiellement. Ils s'étendent le long des bords transversaux des éléments de mât 14.

Les connecteurs intermédiaires 37 sont disposés de préférence sur la même surface du tronçon de mât 1 que les connecteurs d'élément 36. Ainsi, dans l'exemple représenté sur les figures 1 à 6, les connecteurs intermédiaires 37 sont disposés sur la surface extérieure 13 du tronçon de mât 1. Ils prennent appui surfacique sur la surface extérieure 13 du tronçon de mât 1, et plus particulièrement sur la face extérieure 19 des segments de mât 16 adjacents selon la direction longitudinale connectés entre eux par le connecteur intermédiaire 37.

De préférence, les connecteurs intermédiaires 37 sont sensiblement plans. Ils présentent, dans l'exemple représenté, un contour rectangulaire. Ils s'étendent selon une direction d'allongement perpendiculaire à la direction longitudinale.

Les connecteurs intermédiaires 37 présentent une largeur inférieure ou égale à la largeur de la facette du tronçon de mât 1 sur laquelle ils sont fixés, prise au niveau du plan de jonction P entre ces éléments de mât 14. Cette facette est formée par la réunion des pans centraux 20 des deux segments de paroi 16 adjacents longitudinalement. A titre d'exemple, les connecteurs intermédiaires 37 présentent une largeur supérieure ou égale à 50% de la largeur de cette facette, prise au niveau du plan de jonction P entre ces éléments de mât 14, et en particulier une largeur sensiblement égale à la largeur de cette facette.

Les connecteurs intermédiaires 37 participent à la tenue en rigidité le long du mât 2, et plus particulièrement entre deux éléments de mât 14 adjacents.

Les connecteurs intermédiaires 37 sont fixés sur les segments de paroi 16 par l'intermédiaire de troisièmes organes de connexion, tels que des vis ou des boulons. Chaque connecteur intermédiaire 37 comprend un réseau régulier d'orifices de connexion 47 destinés à recevoir les troisièmes organes de connexion. Ce réseau est par exemple un réseau à maille rectangulaire, et par exemple à maille carrée. Les orifices de connexion 47 sont répartis régulièrement sur toute la surface des connecteurs intermédiaires 37. La distance entre orifices de connexion 47 adjacents est choisie de sorte à optimiser la résistance mécanique et l'endurance à la fatigue en fonction des besoins.

Lorsque le tronçon de mât 1 comprend des connecteurs intermédiaires 37, les segments de paroi 16 comprennent un réseau d'orifices de connexion coïncidant avec le réseau d'orifices de connexion des connecteurs intermédiaires 37.

Pour des raisons de simplification des dessins, les troisièmes organes de connexion n'ont pas été représentés sur les figures.

L'invention a également pour objet un procédé d'assemblage d'un tronçon de mât 1 tel que décrit précédemment.

Ce procédé d'assemblage comprend :
- la fourniture de segments de paroi 16 et l'assemblage de ces segments de paroi 16 entre eux par l'intermédiaire des connecteurs de segment 26 de sorte à former des éléments de mât 14 ; et
- l'empilement, selon la direction longitudinale, de deux éléments de mât 14 et la connexion entre eux de ces deux éléments de mât 14 au moyen des connecteurs d'élément 36.

Selon l'invention, les connecteurs d'élément 36 sont disposés sur une surface du tronçon de mât 1 opposée à la surface sur laquelle sont disposés les connecteurs de segment 26. Ainsi, les connecteurs d'élément 36 et les connecteurs de segment 26 sont disposés de part et d'autre des segments de paroi 16, selon la direction radiale.

De préférence, les connecteurs de segment 26 et/ou les connecteurs d'élément 36 sont pré-assemblés sur des segments de paroi 16 préalablement à l'assemblage des segments de paroi 16 entre eux pour former les éléments de mât 14. Ils sont notamment préassemblés aux segments de paroi 16 sur le site de fabrication des segments de paroi 16, préalablement au transport des segments de paroi 16 sur le site d'assemblage du tronçon de mât 1.

Plus particulièrement, les connecteurs de segment 26 sont préassemblés sur une face du segment de paroi 16 et les connecteurs d'élément 36 sont préassemblés sur la face opposée du segment de paroi 16. A titre d'exemple, les connecteurs de segment 26 sont préassemblés sur la face intérieure 17 du segment de paroi 16 et les connecteurs d'élément 36 sont préassemblés sur la face extérieure 18 du segment de paroi 16

En option, lors de l'étape d'empilement, les deux éléments de mât 14 sont en outre connectés au moyen de connecteurs intermédiaires 37, ces connecteurs intermédiaires 37 étant de préférence disposés à cheval sur deux pans centraux 18 adjacents longitudinalement des segments de paroi 16 des deux éléments de mât 14.

De préférence, les connecteurs intermédiaires 37 sont pré-assemblés sur des segments de paroi 16 préalablement à l'assemblage des segments de paroi 16 entre eux pour former les éléments de mât 14. Ils sont notamment préassemblés aux segments de paroi 16 sur le site de fabrication des segments de paroi 16, préalablement au transport des segments de paroi 16 sur le site d'assemblage du tronçon de mât 1. A titre d'exemple, les connecteurs intermédiaires 37 sont pré-assemblés sur la même face du segment de paroi 16 que les connecteurs d'élément 36.

A titre d'exemple, chaque segment de paroi 16 comprend au moins un connecteur de segment 26 pré-assemblé à l'un de ses bords longitudinaux et/ou au moins un connecteur d'élément 36, pré-assemblé à l'un parmi le bord inférieur et le bord supérieur du segment de paroi 16, et de préférence au bord supérieur de celui. En option, chaque segment de paroi 16 comprend en outre au moins un connecteur intermédiaire 37, pré-assemblé au même bord du segment de paroi 16 que le connecteur d'élément 36.

Dans le cas où les connecteurs d'élément sont pré-assemblés sur les segments de paroi 16, comme cela a été décrit précédemment, l'assemblage des éléments de mât entre eux peut être réalisé par l'intérieur du tronçon de mât 1, ce qui est avantageux d'un point de vue de la sécurité.

L'invention concerne également un mât d'éolienne 2 comprenant au moins un tronçon de mât 1 tel que décrit précédemment. Avantageusement, le mât d'éolienne 2 est formé par empilement, selon la direction longitudinale, de tels tronçons de mât 1.

Le tronçon de mât 1 selon l'invention est avantageux. En effet, ce tronçon de mât 1 présente une très bonne résistance à la flexion grâce à la répartition des connecteurs de segments 26 et des connecteurs d'élément 36 sur les deux faces du tronçon de mât, en particulier au niveau de la jonction entre éléments de mât 14. En particulier, l'alternance des connecteurs entre les deux faces du tronçon de mât contribue à réduire les contraintes liées aux effets des excentricités qui se manifestent à travers des contributions supplémentaires et localisées provenant du moment de flexion, en particulier dans la région entre les connecteurs de segment 26 et les connecteurs d'élément 36.

Par ailleurs, le tronçon de mât 1 selon l'invention est simple et peu coûteux à assembler.

Selon une variante (non représentée) du mode de réalisation représenté aux figures 1 à 6, le tronçon de mât comprend en outre des renforts destinés à permettre une meilleure répartition des contraintes au sein du tronçon de mât en particulier de part et d'autre du plan de jonction P.

Les renforts sont disposés sur la même surface du tronçon de mât 1 que les connecteurs de segment 26, en s'étendant à cheval sur deux éléments de mât 14 adjacents.

Chaque renfort s'étend dans le prolongement longitudinal d'au moins un connecteur de segment 26 et en regard, selon la direction radiale, d'un connecteur d'élément 36. Les segments de paroi 16 connectés entre eux par le connecteur de segment 26 se retrouvent ainsi localement interposés entre le connecteur d'élément 36 s'étendant d'un côté de la paroi et le renfort s'étendant de l'autre côté de cette paroi. Ainsi, au niveau de chaque renfort, il se produit une superposition, selon la direction radiale, du renfort, de la paroi de l'élément de mât 14 et du connecteur de segment 26 résultant en une triple épaisseur de parois.

Le renfort est plan. Il est avantageusement réalisé par simple découpage à partir d'une tôle d'acier. Il présente une forme rectangulaire allongée suivant une direction perpendiculaire à la direction longitudinale.

Afin d'améliorer la répartition des contraintes sans compromettre la connexion des éléments de mâts, la taille du renfort est maintenue strictement inférieure à la taille du connecteur d'élément 36 en regard selon la direction radiale. En particulier la hauteur du renfort est strictement inférieure à la hauteur du connecteur d'élément 36. Autrement dit, le renfort est espacé, selon la direction longitudinale, du connecteur de segment 26 adjacent. De préférence, la distance, selon la direction longitudinale, entre le renfort et chaque connecteur de segment 26 adjacent longitudinalement est supérieure ou égale à la hauteur du renfort. Plus préférentiellement, le renfort présente une hauteur comprise entre 10 et 30% de la hauteur du connecteur d'élément.

De préférence, la largeur du renfort 60 est supérieure ou égale à la largeur des connecteurs de segment 26 adjacents. Elle est de préférence inférieure ou égale à la largeur de la facette du tronçon de mât 1 sur laquelle le renfort est fixé, prise au niveau du plan de jonction P entre ces deux éléments de mât 14. Elle est par exemple supérieure ou égale à 70% de la largeur de la facette du tronçon de mât 1 sur laquelle est fixé le renfort, prise au niveau du plan de jonction P entre ces deux éléments de mât 14, et plus particulièrement à 85% de cette largeur. Plus particulièrement encore, les renforts présentent une largeur sensiblement égale à la largeur de la facette du tronçon de mât 1 sur laquelle ils sont fixés.

De préférence, les renforts sont symétriques par rapport au plan de jonction P entre les éléments de mât 14 qu'ils chevauchent.

De préférence, tous les renforts 60 sont identiques.

A titre d'exemple, chaque renfort comprend un réseau régulier d'orifices de connexion destinés à recevoir des organes de connexion du renfort aux éléments de mât 14. Le réseau d'orifices de connexion coïncide avec le réseau d'orifices de connexion 39 des connecteurs d'élément 36. Les organes de connexion du renfort sont de préférence confondus avec les deuxièmes organes de connexion qui réalisent la fixation des connecteurs d'élément 36 aux éléments de mât 14. De préférence, chaque renfort comprend, de chaque côté du plan de jonction P, une seule ligne d'orifices de connexion coïncidant avec la première ligne d'orifices de connexion 39 du connecteur d'élément 36 correspondant.

Ces renforts, bien que s'étendant à cheval sur deux éléments de mât 14 sont à distinguer des connecteurs d'élément 36. Tandis que ces derniers assurent la connexion entre les éléments de mât, les renforts, de par leur taille réduite, ne sont pas aptes à assurer la connexion entre les éléments. Par le fait qu'ils viennent former une triple épaisseur localement de part et d'autre du plan de jonction, ils contribuent uniquement à améliorer localement la répartition des contraintes.

Optionnellement, le tronçon de mât 1 comprend en outre des renforts intermédiaires disposés sur la même surface du tronçon de mât 1 que les renforts, en s'étendant à cheval sur deux éléments de mât 14 adjacents, entre les deux renforts adjacents.

Les renforts intermédiaires connectent les éléments de mât 14 entre eux au niveau des pans centraux 18 de leurs segments de paroi 16. Ils s'étendent à cheval sur les deux éléments de mât 14 adjacents en étant fixés sur les pans centraux 18 des segments de paroi 16 de ces éléments de mât 14.

Les renforts intermédiaires présentent une géométrie identique à celle des connecteurs de renfort 60.

Dans le cas où le tronçon de mât 1 comprend des connecteurs intermédiaires 37, chaque renfort intermédiaire s'étend en regard, selon la direction radiale, d'un connecteur intermédiaire 37.

Le procédé d'assemblage des tronçons de mât 1 selon cette variante diffère du procédé décrit au regard des figures uniquement en ce que l'étape d'assemblage des éléments de mât 14 entre eux comprend également l'assemblage sur les segments de paroi des renforts, et optionnellement des renforts intermédiaires.

De façon similaire à ce qui a été décrit précédemment, ces renforts peuvent être pré-assemblés sur les segments de paroi 16 correspondants.

Un tronçon de mât 1 selon une variante du mode de réalisation représenté sur les figures diffère du tronçon de mât 1 représenté sur les figures uniquement en ce que les éléments de mât 14 adjacents longitudinalement sont décalés angulairement l'un par rapport à l'autre de sorte que les bords longitudinaux d'un segment de paroi 16 de l'élément de mât 14 supérieur ne soient pas dans le prolongement des bords longitudinaux du segment de paroi 16 adjacent longitudinalement de l'élément de mât 14 inférieur. Autrement dit, les lignes de jonction entre segments de paroi 16 adjacents circonférentiellement de l'élément de mât 14 supérieur sont décalées angulairement par rapport aux lignes de jonction entre segments de paroi 16 adjacents circonférentiellement de l'élément de mât 14 inférieur. Elles ne s'étendent pas dans le prolongement l'une de l'autre selon la direction longitudinale.

Selon cette variante, au moins un pan central 18 d'un segment de paroi 16 de l'élément de mât 14 supérieur s'étend en regard, selon la direction longitudinale, de deux pans latéraux 20 adjacents de l'élément de mât 14 inférieur.

Ainsi, les connecteurs de segment 26 de l'élément de mât 14 supérieur sont décalés angulairement par rapport aux connecteurs de segment 26 de l'élément de mât 14 inférieur. Ils ne s'étendent pas dans le prolongement l'un de l'autre.

Dans cette variante, compte tenu du décalage angulaire entre les éléments de mât 14 adjacents, chaque connecteur d'élément 36 s'étend en regard d'un seul connecteur de segment 26. Par ailleurs, chaque connecteur d'élément 36 s'étend à cheval sur trois segments de paroi 16, et non quatre comme dans le mode de réalisation précédent.

Le procédé d'assemblage du tronçon de mât 1 selon cette variante est analogue à celui décrit précédemment, la seule différence étant que les éléments de mât 14 sont empilés de telle sorte qu'il existe un décalage angulaire entre les éléments de mât 14 adjacents.

Le tronçon de mât 1 selon cette variante présente les mêmes avantages que ceux décrits précédemment.

Par ailleurs, le décalage angulaire des éléments de mât 14 améliore la résistance mécanique du tronçon de mât 1 et du mât 2 dans la mesure où les lignes de jonction entre segments de paroi 16 des éléments de mât 14 adjacents, matérialisées par les connecteurs de segment 26, ne sont pas disposées en regard selon la direction longitudinale. En effet, les zones plus faibles mécaniquement sont ainsi mieux réparties selon la circonférence du tronçon de mât 1, ce qui améliore encore la résistance mécanique du mât d'éolienne 2.

Dans le mode de réalisation décrit en regard des figures, les connecteurs de segment 26, ainsi que, optionnellement, les renforts et/ou les renforts intermédiaires, sont disposés sur la surface intérieure 12 du tronçon de mât 1, tandis que les connecteurs d'élément 36 et les connecteurs intermédiaires 37 optionnels sont disposés sur la surface extérieure 13 du tronçon de mât 1. Le tronçon de mât 1 selon des variantes diffère de ce tronçon de mât des modes de réalisation des figures uniquement en ce que les connecteurs de segment 26, ainsi que, optionnellement, les renforts et/ou les renforts intermédiaires, sont disposés sur la surface extérieure 13 du tronçon de mât 1, tandis que les connecteurs d'élément 36 et les connecteurs intermédiaires 37 optionnels, sont disposés sur la surface intérieure 12 du tronçon de mât 1.

Le tronçon de mât 1 selon cette variante présente les mêmes avantages que ceux décrits précédemment en regard du mode de réalisation des figures 1 à 6.

Par ailleurs, selon cette variante, le procédé d'assemblage diffère du procédé décrit ci-dessus uniquement par les faces des segments de paroi 16 sur lesquelles sont rapportés les connecteurs de segment 26, les connecteurs d'élément 36, et les éventuels connecteurs intermédiaires 37, renforts 60 et renforts intermédiaires 64.

## Revendications

1. Tronçon de mât (1) pour éolienne présentant un axe central longitudinal (L) s'étendant suivant une direction longitudinale et comprenant une paroi comprenant une surface intérieure (12) et une surface extérieure (13),
le tronçon de mât (1) comprenant au moins deux éléments de mât (14) tubulaires empilés selon la direction longitudinale, agencés bord à bord au niveau d'un plan de jonction (P) et connectés entre eux par des connecteurs d'élément (36) s'étendant chacun à cheval sur lesdits deux éléments de mât (14),
chaque élément de mât (14) comprenant au moins deux segments de paroi (16), connectés entre eux par des connecteurs de segment (26) s'étendant le long des bords longitudinaux des segments de paroi (16),
**caractérisé en ce que** les connecteurs d'élément (36) sont disposés uniquement sur l'une parmi la surface intérieure (12) et la surface extérieure (13) de la paroi du tronçon de mât (1) et les connecteurs de segment (26) sont disposés uniquement sur l'autre parmi la surface intérieure (12) et la surface extérieure (13) de la paroi du tronçon de mât (1),
et aucun connecteur d'élément (36) ne s'étendant au moins en partie en regard d'un connecteur de segment (26) selon une direction radiale du tronçon de mât (1) de sorte que la paroi n'est en aucun point interposée entre ce connecteur d'élément (36) et un connecteur de segment (26).

2. Tronçon de mât (1) selon la revendication 1, dans lequel les connecteurs d'élément (36) sont disposés sur la surface extérieure (13) du tronçon de mât (1) et les connecteurs de segment (26) sont disposés sur la surface intérieure (12) du tronçon de mât (1).

3. Tronçon de mât (1) selon l'une quelconque des revendications précédentes, dans lequel chaque connecteur d'élément (36) s'étend entre au moins deux connecteurs de segment (26) alignés selon la direction longitudinale, l'un de ces deux connecteurs de segment (26), dit connecteur de segment supérieur, étant disposé au-dessus du plan de jonction (P) entre les deux éléments de mât (14) et l'autre de ces deux connecteurs de segment (26), dit connecteur de segment inférieur, étant disposé en-dessous de ce plan de jonction (P).

4. Tronçon de mât (1) selon la revendication 3, dans lequel l'écart entre le bord transversal supérieur du connecteur d'élément (36) et le bord transversal inférieur du connecteur de segment (26) supérieur est supérieur ou égal à zéro et l'écart entre le bord transversal inférieur du connecteur d'élément (36) et le bord transversal supérieur du connecteur de segment (26) inférieur est supérieur ou égal à zéro.

5. Tronçon de mât (1) selon la revendication 3, dans lequel le bord transversal supérieur du connecteur d'élément (36) et le bord transversal inférieur du connecteur de segment (26) supérieur sont situés dans un même plan perpendiculaire à la direction longitudinale et dans lequel le bord transversal inférieur du connecteur d'élément (36) et le bord transversal supérieur du connecteur de segment (26) inférieur sont situés dans un même plan perpendiculaire à la direction longitudinale.

6. Tronçon de mât (1) selon l'une quelconque des revendications précédentes, dans lequel chaque connecteur de segment (26) et/ou chaque connecteur d'élément (36) est sous la forme d'une plaque plane.

7. Tronçon de mât (1) selon l'une quelconque des revendications précédentes, dans lequel chaque segment de paroi (16) comprend au moins un pan central (18) et deux pans latéraux (20) formant un angle avec le ou chaque pan central (18), les pans latéraux (20) comprenant les bords longitudinaux du segment de paroi (16).

8. Tronçon de mât (1) selon la revendication 7, lequel comprend en outre des connecteurs intermédiaires (37), disposés à cheval sur deux éléments de mât (14) adjacents, entre deux connecteurs d'élément (36) adjacents circonférentiellement, lesdits connecteurs intermédiaires (37) étant disposés sur la même surface parmi la surface intérieure (12) et la surface extérieure (13) du tronçon de mât (1) que les connecteurs d'élément (36).

9. Tronçon de mat (1) selon la revendication 8, dans lequel chaque connecteur intermédiaire (37) s'étend à cheval sur deux pans centraux (18) adjacents longitudinalement des deux éléments de mât (14) et chaque connecteur de segment (26) s'étend à cheval sur deux pans latéraux (20) adjacents circonférentiellement de l'un au moins des deux éléments de mât (14) adjacents.

10. Tronçon de mât (1) selon l'une quelconque des revendications 1 à 9, dans lequel les bords longitudinaux d'un segment de paroi (16) de l'élément de mât (14) supérieur se situent dans le prolongement des bords longitudinaux du segment de paroi (16) adjacent selon la direction longitudinale de l'élément de mât (14) inférieur.

11. Tronçon de mât (1) selon l'une des revendications 1 à 9, dans lequel les éléments de mât (14) adjacents sont décalés angulairement les uns par rapport aux autres.

12. Tronçon de mât (1) selon l'une quelconque des revendications précédentes, lequel présente une forme tubulaire de section transversale polygonale, chaque côté de ce polygone définissant une facette du tronçon de mât (1).

13. Mât d'éolienne (2) comprenant au moins un tronçon de mât (1) selon l'une quelconque des revendications précédentes.

14. Procédé d'assemblage d'un tronçon de mât (1) selon l'une quelconque des revendications 1 à 12, comprenant :
- la fourniture de segments de paroi (16) et l'assemblage de ces segments de paroi (16) entre eux par l'intermédiaire de connecteurs de segment (26) de sorte à former des éléments de mât (14) ;
- l'empilement, selon la direction longitudinale, de deux éléments de mât (14) et la connexion entre eux de ces deux éléments de mât (14) au moyen de connecteurs d'élément (36).

## Patentansprüche

1. Mastabschnitt (1) für eine Windkraftanlage, der eine mittlere Längsachse (L) aufweist, die sich in einer Längsrichtung erstreckt, und umfassend eine Wand, umfassend eine Innenfläche (12) und eine Außenfläche (13),
der Mastabschnitt (1) umfassend mindestens zwei rohrförmige Mastelemente (14), die in Längsrichtung gestapelt und Kante an Kante an einer Verbindungsebene (P) angeordnet sind und durch Elementverbinder (36) miteinander verbunden sind, die sich jeweils rittlings auf den Mastelementen (14) erstrecken,
jedes Mastelement (14) umfassend mindestens zwei Wandsegmente (16), die durch Segmentverbinder (26) miteinander verbunden sind, die sich entlang der Längskanten der Wandsegmente (16) erstrecken,
**dadurch gekennzeichnet, dass** die Elementverbinder (36) nur an einer von der Innenfläche (12) und der Außenfläche (13) der Wand des Mastabschnitts (1) angeordnet sind und die Segmentverbinder (26) nur an der anderen von der Innenfläche (12) und der Außenfläche (13) der Wand des Mastabschnitts (1) angeordnet sind,
und kein Elementverbinder (36) sich zumindest teilweise gegenüber einem Segmentverbinder (26) in einer radialen Richtung des Mastabschnitts (1) erstreckt, sodass die Wand an keinem Punkt zwischen diesem Elementverbinder (36) und einem Segmentverbinder (26) eingefügt ist.

2. Mastabschnitt (1) nach Anspruch 1, wobei die Elementverbinder (36) an der Außenfläche (13) des Mastabschnitts (1) angeordnet sind und die Segmentverbinder (26) an der Innenfläche (12) des Mastabschnitts (1) angeordnet sind.

3. Mastabschnitt (1) nach einem der vorherigen Ansprüche, wobei sich jeder Elementverbinder (36) zwischen mindestens zwei Segmentverbindern (26) ausgerichtet in Längsrichtung erstreckt, wobei einer dieser zwei Segmentverbinder (26), der als oberer Segmentverbinder bezeichnet wird, oberhalb der Verbindungsebene (P) zwischen den zwei Mastelementen (14) angeordnet ist, und der andere dieser zwei Segmentverbinder (26), der als unterer Segmentverbinder bezeichnet wird, unterhalb dieser Verbindungsebene (P) angeordnet ist.

4. Mastabschnitt (1) nach Anspruch 3, wobei der Abstand zwischen der oberen Querkante des Elementverbinders (36) und der unteren Querkante des oberen Segmentverbinders (26) größer als oder gleich wie null ist und der Abstand zwischen der unteren Querkante des Elementverbinders (36) und der oberen Querkante des unteren Segmentverbinders (26) größer als oder gleich wie null ist.

5. Mastabschnitt (1) nach Anspruch 3, wobei sich die obere Querkante des Elementverbinders (36) und die untere Querkante des oberen Segmentverbinders (26) in einer gleichen Ebene senkrecht zu der Längsrichtung befinden und wobei die untere Querkante des Elementverbinders (36) und sich die obere Querkante des unteren Segmentverbinders (26) in einer gleichen Ebene senkrecht zu der Längsrichtung befinden.

6. Mastabschnitt (1) nach einem der vorherigen Ansprüche, wobei jeder Segmentverbinder (26) und/oder jeder Elementverbinder (36) in Form einer ebenen Platte ist.

7. Mastabschnitt (1) nach einem der vorherigen Ansprüche, wobei jedes Wandsegment (16) mindestens eine mittlere Fläche (18) und zwei Seitenflächen (20) umfasst, die einen Winkel mit der oder jeder mittleren Fläche (18) bilden, wobei die Seitenflächen (20) die Längskanten des Wandsegments (16) umfassen.

8. Mastabschnitt (1) nach Anspruch 7, der ferner Zwischenverbinder (37) umfasst, die rittlings auf zwei benachbarten Mastelementen (14) zwischen zwei in Umfangsrichtung benachbarten Elementverbindern (36) angeordnet sind, wobei die Zwischenverbinder (37) auf der gleichen Fläche der Innenfläche (12) und der Außenfläche (13) des Mastabschnitts (1) wie die Elementverbinder (36) angeordnet sind.

9. Mastabschnitt (1) nach Anspruch 8, wobei sich jeder Zwischenverbinder (37) rittlings über zwei in Längsrichtung benachbarte mittlere Flächen (18) der zwei Mastelemente (14) erstreckt und sich jeder Segmentverbinder (26) rittlings über zwei in Umfangsrichtung benachbarte mittlere Flächen (20) von mindestens einem der zwei benachbarten Mastelemente (14) erstreckt.

10. Mastabschnitt (1) nach einem der Ansprüche 1 bis 9, wobei sich die Längskanten eines Wandsegments (16) des oberen Mastelements (14) in Längsrichtung des unteren Mastelements (14) in Verlängerung der Längskanten des benachbarten Wandsegments (16) befinden.

11. Mastabschnitt (1) nach einem der Ansprüche 1 bis 9, wobei benachbarte Mastelemente (14) winkelversetzt zueinander angeordnet sind.

12. Mastabschnitt (1) nach einem der vorherigen Ansprüche, der eine Rohrform mit polygonalem Querschnitt aufweist, wobei jede Seite dieses Polygons eine Facette des Mastabschnitts (1) definiert.

13. Windkraftanlagenmast (2), umfassend mindestens einen Mastabschnitt (1) nach einem der vorherigen Ansprüche.

14. Verfahren zum Zusammensetzen eines Mastabschnitts (1) nach einem der Ansprüche 1 bis 12, umfassend:
- das Bereitstellen von Wandsegmenten (16) und das Zusammensetzen dieser Wandsegmente (16) miteinander über Segmentverbinder (26), um Mastelemente (14) zu bilden;
- das Stapeln von zwei Mastelementen (14) in Längsrichtung und das Verbinden dieser zwei Mastelemente (14) miteinander mittels Elementverbindern (36).

## Claims

1. Mast section (1) for a wind turbine having a central longitudinal axis (L) extending in a longitudinal direction and comprising a wall having an inner surface (12) and an outer surface (13),
the mast section (1) comprising at least two tubular mast elements (14) stacked in the longitudinal direction, arranged edge to edge at a joining plane (P) and connected to each other by element connectors (36) each extending astride said two mast elements (14),
each mast element (14) comprising at least two wall segments (16), connected to each other by segment connectors (26) extending along the longitudinal edges of the wall segments (16),
**characterised in that** the element connectors (36) are disposed only on one of the inner surface (12) and the outer surface (13) of the wall of the mast section (1) and the segment connectors (26) are disposed only on the other of the inner surface (12) and the outer surface (13) of the wall of the mast section (1),
and no element connector (36) extending at least partially opposite a segment connector (26) in a radial direction of the mast section (1) so that the wall is not interposed at any point between that element connector (36) and a segment connector (26).

2. Mast section (1) according to claim 1, wherein the element connectors (36) are arranged on the outer surface (13) of the mast section (1) and the segment connectors (26) are arranged on the inner surface (12) of the mast section (1).

3. Mast section (1) according to any one of the preceding claims, wherein each element connector (36) extends between at least two segment connectors (26) aligned in the longitudinal direction, one of these two segment connectors (26), referred to as the upper segment connector, being disposed above the joining plane (P) between the two mast elements (14) and the other of these two segment connectors (26), referred to as the lower segment connector, being disposed below this joining plane (P).

4. Mast section (1) according to claim 3, wherein the distance between the upper transverse edge of the element connector (36) and the lower transverse edge of the upper segment connector (26) is greater than or equal to zero and the distance between the lower transverse edge of the element connector (36) and the upper transverse edge of the lower segment connector (26) is greater than or equal to zero.

5. Mast section (1) according to claim 3, wherein the upper transverse edge of the element connector (36) and the lower transverse edge of the upper segment connector (26) lie in a same plane perpendicular to the longitudinal direction and wherein the lower transverse edge of the element connector (36) and the upper transverse edge of the lower segment connector (26) lie in a same plane perpendicular to the longitudinal direction.

6. Mast section (1) according to any of the preceding claims, wherein each segment connector (26) and/or each element connector (36) is in the form of a flat plate.

7. Mast section (1) according to any of the preceding claims, wherein each wall segment (16) comprises at least one central flap (18) and two side flaps (20) forming an angle with the or each central flap (18), the side flaps (20) comprising the longitudinal edges of the wall segment (16).

8. Mast section (1) according to claim 7, which further comprises intermediate connectors (37), disposed astride two adjacent mast elements (14), between two circumferentially adjacent member connectors (36), said intermediate connectors (37) being disposed on the same one of the inner surface (12) and the outer surface (13) of the mast section (1) as the member connectors (36).

9. Mast section (1) according to claim 8, wherein each intermediate connector (37) straddles two longitudinally adjacent central flaps (18) of the two mast members (14) and each segment connector (26) straddles two circumferentially adjacent side flaps (20) of at least one of the two adjacent mast elements (14).

10. Mast section (1) according to any one of claims 1 to 9, wherein the longitudinal edges of a wall segment (16) of the upper mast element (14) lie in extension of the longitudinal edges of the adjacent wall segment (16) in the longitudinal direction of the lower mast element (14).

11. Mast section (1) according to any of claims 1 to 9, wherein the adjacent mast elements (14) are angularly offset from each other.

12. Mast section (1) according to any one of the preceding claims, which has a tubular shape of polygonal cross-section, each side of this polygon defining a facet of the mast section (1).

13. Wind turbine mast (2) comprising at least one mast section (1) according to any of the preceding claims.

14. Method of assembling a mast section (1) according to any one of claims 1 to 12, comprising:
- providing wall segments (16) and assembling these wall segments (16) together via segment connectors (26) so as to form mast elements (14);
- stacking, in the longitudinal direction, two mast elements (14) and connecting these two mast elements (14) to each other by means of element connectors (36).
